# EUROPÄISCHE PATENTANMELDUNG

(11) **EP 1 281 488 A2**
(43) Veröffentlichungstag der Anmeldung: **05.02.2003**
(21) Anmeldenummer: 02015028.0
(22) Anmeldetag: 05.07.2002
(51) Int. Cl.: B26D 7/27, B31F 1/07, B41F 19/02

(54) **Vorrichtung sowie Verfahren zum fliegenden mechanischen Bearbeiten von blattförmigen Bedruckstoffen durch Bearbeitungsmodule**

(30) Priorität: 30.07.2001 DE 10137165
(71) Anmelder: Heidelberger Druckmaschinen Aktiengesellschaft, 69115 Heidelberg (DE)
(72) Erfinder: Blank, Kurt, 73061 Ebersbach (DE); Müller, Eduard, 73312 Geislingen-Türkheim (DE); Ries, Jürgen, 73760 Ostfildern (DE)
(74) Vertreter: Franzen, Peter

(57) **Zusammenfassung**

Die Erfindung betrifft eine Vorrichtung zur fliegenden mechanischen Bearbeitung von blattförmigen Bedruckstoffen (1) mit mindestens einem zweiteiligen Bearbeitungswerkzeug (45) mit mindestens einem Bearbeitungsmodus für die mechanische Bearbeitung von blattförmigen Bedruckstoffen (1), wobei dass das zweiteilige Bearbeitungswerkzeug (45) in einem Bearbeitungsmodul (40, 40') angeordnet ist und die Vorrichtung (100) einen Aufnahmeplatz (50) umfasst, an dem das Bearbeitungsmodul (40, 40') austauschbar befestigt ist, wobei der Aufnahmeplatz (50) auch mindestens ein Bearbeitungsmodul (40, 40') mit mindestens einem anderen Bearbeitungsmodus aufnehmen kann.

## Beschreibung

Die Erfindung betrifft eine Vorrichtung zum fliegenden mechanischen Bearbeiten von blattförmigen Bedruckstoffen, gemäß des Oberbegriffs des Anspruchs 1.

In der Druckindustrie besteht der Bedarf an mechanischer Bearbeitung von Bedruckstoffen insbesondere in der Druckweiterverarbeitung zur Vorbereitung für einen Bindevorgang, mittels dessen einzeln bedruckte Blätter zu einer Broschüre, einem Buch oder ähnlichem zusammengefügt werden.

Unter der Vielzahl möglicher Weiterverarbeitungsmöglichkeiten, die detailliert z.B. in H. Kipphan: "Handbuch der Printmedien"; Springer Verlag (2000) nachzulesen sind, gibt es die fliegende Bearbeitung von blattförmigen Bedruckstoffen. Dabei versteht man unter fliegender Bearbeitung, dass die blattförmigen Bedruckstoffe im bewegten Zustand bearbeitet werden, im Gegensatz zu Systemen, bei denen mehrere blattförmige Bedruckstoffe im ruhenden Zustand z.B. gelocht oder beschnitten werden. Typischerweise werden beim fliegenden Bearbeiten die blattförmigen Bedruckstoffe einzeln bearbeitet und im Anschluss gesammelt, wogegen bei anderen Verfahren die blattförmigen Bedruckstoffe zunächst gesammelt und im Anschluss bearbeitet werden. Das fliegende Bearbeiten von blattförmigen Bedruckstoffen hat demgegenüber den Vorteil, dass diese Bearbeitung besser dem Arbeitsablauf einer Druckmaschine für blattförmige Bedruckstoffe entspricht, die typischerweise die blattförmigen Bedruckstoffen sequentiell bedruckt. Daher bietet sich das fliegende Bearbeiten für die Druckweiterverarbeitung besonders für sogenannte Inline-Geräte an, die direkt an eine solche Druckmaschine, z.B. einen digitalen Drucker oder Kopierer angeschlossen sind. Die fliegende Bearbeitung ist dabei aber nicht an Inline-Geräte gebunden, sondern kann ebenfalls in sogenannten Offline-Geräten, die nicht in direktem Kontakt mit einer Druckmaschine stehen, vorteilhaft eingesetzt werden.

Bei den Weiterverarbeitungsmöglichkeiten oder Bearbeitungsmodi handelt es sich beispielsweise um das Stanzen von Löchern in die Bedruckstoffe, z.B. zur Ablage in Ordnern oder für Ringbuchbindungen oder für anschließende Draht/Kunststoffbindungen, dem Beschneiden der Bedruckstoffe, z.B. für Formatverkleinerungen oder Register, dem Prägen von Schriftzügen oder Emblemen, z.B. für Briefköpfe oder Buchdeckel, oder dem Perforieren von Seiten, z.B. für Taschenkalender, dem Falten von blattförmigen Bedruckstoffen und dem Rillen von Bedruckstoffen zur Unterstützung von Faltvorgängen, insbesondere für Bucheinbände.

Vorrichtungen, die diese verschiedenen Weiterverarbeitungsmöglichkeiten oder Bearbeitungsmodi ausführen, sind aus dem Stand der Technik in großer Zahl bekannt und werden auch übersichtlich in H. Kipphan dargestellt.

Es ist wünschenswert, eine Weiterverarbeitungsvorrichtung möglichst flexibel zu gestalten, da die Anforderungen z.B. an die Position der Löcher oder Perforationskanten von einem Druckauftrag zum nächsten wechseln können. Daher ist es wünschenswert, Weiterverarbeitungsvorrichtungen zur Verfügung zu stellen, mit denen ein Wechsel zwischen unterschiedlichen Bearbeitungsmodi schnell durchführbar ist und dabei auch eine große Anzahl unterschiedlicher Bearbeitungsmodi zur Verfügung steht.

In Rollendruckmaschinen werden Stanzbleche eingesetzt, die erhabene Strukturen tragen, die mittels Oberflächenmikromechanik hergestellt werden. Zur Druckweiterverarbeitung werden die Stanzbleche auf Magnetwalzen gegenüber Gegenzylindern aufgezogen und durchlaufende Druckträger durch die erhabenen Strukturen je nach Struktur perforiert, gestanzt, gerillt oder beschnitten. Dabei bewegen sich Magnetwalze und Gegenzylinder synchron mit den vorangegangenen Druckwerken. Nachteilig daran sind die hohen Anschaffungskosten und die Einzelkosten für die Herstellung der Stanzbleche, so dass diese Technik nur für hohe Druckauflagen geeignet ist.

In der US Patentschrift US 2,116,391 wird eine Vorrichtung zur flexiblen Einstellung von Stanzmustern bei einer Stanzvorrichtung offenbart. Hier werden einzelne Stempel auf axial verschiebbaren Zahnkränzen fixiert. Durch die Zahnkränze, die zusätzlich mit einem Maßstab ausgestattet sind, wird eine winkelgenaue Positionierung der Stempel auf dem Umfang der Zahnkränze erreicht, gleiches gilt für die Positionierung der dazugehörigen Matrizen. In der oben genannten Schrift vorgeschlagenen Lösung werden die Stempel dabei einzeln in ihrer vorgesehenen Position verschraubt. Dadurch ist eine flexible Änderung zwar möglich, aber mit erheblichem Zeitaufwand verbunden.

In der US Patentschrift US 5,669,277 wird ein rotative Lochervorrichtung vorgeschlagen, bei der in einer ersten Welle Halterungen für Stempel für eine Vielzahl unterschiedlicher Lochkombinationen vorgesehen sind. Der Wechsel zwischen unterschiedlichen Lochmustern geschieht durch das Einsetzen bzw. Herausnehmen der betreffenden Stempel aus den entsprechenden Halterungen. Dadurch wird eine hohe Präzision der Stempelpositionen erreicht. Nachteilig ist dagegen, dass die Stempel manuell für jeden Wechsel des Stanzmusters ausgewechselt werden müssen.

In der deutschen Offenlegungsschrift DE 34 27 686 A1 wird eine Vorrichtung offenbart, bei der auf einem Stanzring einer Lochervorrichtung eine Anzahl von radial, in bestimmten Abständen zueinander ausgerichteten Stanzstempeln angebracht sind, die mittels innenliegender Nockenringe zwischen einer ersten äußeren Stanzstellung und einer rückgezogenen passiven Stellung radial verschiebbar sind. Zusätzlich lassen sich die Stanzringe auf der Welle entlang der Achse verschieben, so dass eine große Anzahl unterschiedlicher Stanzmuster erzeugt werden kann. Nachteilig an der beschriebenen Lösung ist, dass der Wechsel zwischen den Stanzmustern nicht während des laufenden Betriebs möglich ist.

In der internationalen Anmeldung WO 98/55278 wird ein Verfahren zum Wechsel von Perforationsmustern vorgeschlagen, bei dem Perforationswerkzeuge ebenfalls radial aus einer passiven in eine aktive Position gebracht werden und damit zu einem Wechsel des Perforationsmusters führen. Hierzu werden die Perforationswerkzeuge federnd gegen einen Schlauch gelagert, wobei sich der Schlauch helisch oder doppelhelisch innerhalb der die Werkzeuge tragenden Walze um die Walze windet. Wird der Schlauch aufgeblasen, wird dadurch ein Hub der Werkzeuge in ihre aktive Position verursacht. Vorteilhaft an dieser Konstruktion ist es, dass ein Wechsel zwischen den Stanzmustern hier zu jeder Zeit möglich ist. Nachteilig dagegen ist die begrenzte Anzahl unterschiedlicher Stanzmuster, diese von der Anzahl der Schläuche abhängt, die sich um die Werkzeug tragende Walze winden, da stets immer ein ganzer Schlauch aufgeblasen wird.

In der deutschen Offenlegungsschrift DE 28 11 109 wird ein modularer Aufbau einer Querperforationsvorrichtung offenbart, bei der die Perforationsvorgänge unterteilt sind, d.h. von getrennten Walzen durchgeführt werden und wobei die Teilung der Querperforation durch Änderung der verhältnismäßigen Stellung der Walzen mit Bezug aufeinander gesteuert wird. Je nach Anzahl der getrennten Perforationswalzen lassen sich so unterschiedliche Perforationsmuster erzielen. Nachteilig ist hier, dass eine große Anzahl an beweglichen Teilen erforderlich ist.

In der europäischen Patentanmeldung EP 1029640A2 wird eine Querbearbeitungsvorrichtung offenbart, die zwei Bearbeitungseinheiten aufweist, die hintereinanderliegen und dadurch zwei aufeinander folgende Bearbeitungsebenen darstellen, wobei jeweils eine der Bearbeitungseinheiten durch eine Steuerung ausgewählt werden kann. In einer Ausführungsform ist die Querbearbeitungsvorrichtung aus einem ersten Synchronschneider und einem unmittlebar benachbarten dynamisch variablen Querschneider aufgebaut. Gemäß der Offenbarung kann jeweils einer der Querschneider stillgelegt werden, solange der andere arbeitet. Der stillgesetzte Einzelschneider bildet in diesem Fall einen Durchlass, in den ein Führungstisch eingefahren werden kann. Durch den wahlweisen Einsatz von zwei Querschneidern kann dadurch eine größere Anzahl von unterschiedlichen Formaten geschnitten werden.

Bei der Weiterverarbeitung von Druckprodukten werden typischerweise ein Mehrzahl unterschiedlicher Bearbeitungsmodi verwendet, wobei häufig aber nicht nur eine Änderung eines Stanz-, oder Perforationsmusters ausreicht, sondern die Bedruckstoffe auch geschnitten, geprägt und/oder gerillt werden sollen. Nachteilig an den genannten und vergleichbaren Vorrichtung des Standes der Technik ist es, dass nur ein Bearbeitungsmodus, also Stanzen oder Lochen oder Rillen oder Prägen usw. möglich ist.

Wünschenswert wäre aber eine Vorrichtung, mittels der eine Mehrzahl an Bearbeitungsmodi möglich ist, die vorteilhafterweise zusätzlich unterschiedliche Funktionalität haben, z.B. 2-Loch- oder 4-Lochstanzen zulassen, und ein Wechsel zwischen den Bearbeitungsmodi schnell und einfach durchgeführt werden kann und die auch für kleine Auflagen geeignet ist, etwa in Kombination mit dem Digitaldruck.

Es ist daher die Aufgabe der Erfindung, eine Vorrichtung zur fliegenden mechanischen Bearbeitung von blattförmigen Bedruckstoffen zu schaffen, mit der eine Mehrzahl an Bearbeitungsmodi möglich ist und ein Wechsel zwischen den Bearbeitungsmodi schnell, einfach und kostengünstig durchgeführt werden kann.

Diese Aufgabe wird mit Hilfe der erfindungsgemäßen Vorrichtung zur fliegenden mechanischen Bearbeitung von blattförmigen Bedruckstoffen mit den im Anspruch 1 genannten Merkmalen gelöst.

Kennzeichnend für die erfindungsgemäße Vorrichtung ist ein modularer Aufbau der Vorrichtung. Die Vorrichtung enthält mindestens ein zweiteiliges Bearbeitungswerkzeug mit mindestens einem bestimmten Bearbeitungsmodus, wobei das ganze Bearbeitungswerkzeug innerhalb eines Bearbeitungsmoduls angeordnet, und die Vorrichtung mindestens einen Aufnahmeplatz für ein Bearbeitungsmodul aufweist, so dass das Bearbeitungsmodul auf einfache Art und Weise gegen ein anderes Bearbeitungsmodul ausgetauscht werden kann. Erfindungsgemäß ist die Vorrichtung aber nicht auf einen Aufnahmeplatz für ein Bearbeitungsmodul beschränkt, sondern kann vielmehr eine Vielzahl von Aufnahmeplätzen aufweisen, in die eine entsprechende Anzahl von Bearbeitungsmodulen eingesetzt und auch ausgetauscht werden können, wobei sich die Bearbeitungsmodule wahlweise in ihrer Funktionalität unterscheiden, aber nicht unterscheiden müssen.

In einer vorteilhaften Ausgestaltung der erfinderischen Vorrichtung handelt es sich bei dem Bearbeitungsmodus um mindestens einen der Bearbeitungsmodi Stanzen, Schneiden, Prägen, Rillen, Falten oder Perforieren. Dadurch kann mit der erfindungsgemäßen Vorrichtung durch Einsetzen des betreffenden Bearbeitungsmoduls jeder der angegebenen Bearbeitungsmodi ausgeführt werden und ein Wechsel zwischen den Bearbeitungsmodi durch einem mit "Plug and Play" vergleichbaren Austausch betreffender Bearbeitungsmodule schnell, einfach und kostengünstig durchgeführt werden.

In einer bevorzugten Ausführungsform weist die Vorrichtung mindestens eine Registrierungsvorrichtung zur Ausrichtung der blattförmigen Bedruckstoffe während des Einlaufens in die Vorrichtung stromabwärts vor dem Bearbeitungsmodul auf.

In einer weiteren vorteilhaften Weiterbildung der erfindungsgemäßen Vorrichtung richtet die Registrierungsvorrichtung ein auf einem Durchlaufspfad transportierten blattförmigen Bedruckstoff mittels eines Schräglaufs mittig zum Durchlaufspfad aus, insbesondere entsprechend des Formats des blattförmigen Bedruckstoffs. Bei der Weiterverarbeitung ist es zweckmäßig, die Position des blattförmigen Bedruckstoffs mittig im Transportpfad auszurichten, da die Bearbeitungsmodi häufig symmetrisch zur Mittellinie eines blattförmigen Bedruckstoffs stattfinden, insbesondere beim Lochen von Blättern. Die mittige Ausrichtung erfolgt vorteilhafterweise durch eine schräg zur Transportrichtung laufende Bewegung, die einen Rand des blattförmigen Bedruckstoffs gegen einen Anschlag führt, wobei der Anschlag wahlweise automatisch eine von dem Format des durchlaufenden blattförmigen Bedruckstoffs abhängige Entfernung relativ zur Mittellinie des Transportpfads einnimmt, die gerade der halben Breite des blattförmigen Bedruckstoffs entspricht.

In einer weiteren vorteilhaften Ausführungsform weist die erfindungsgemäße Vorrichtung stromaufwärts von dem Bearbeitungsmodul mindestens eine Sensorvorrichtung zur Steuerung des Bearbeitungsvorgangs auf. Vorteilhafterweise detektiert die Sensorvorrichtung die Vorderkante eines durchlaufenden blattförmigen Bedruckstoffs und löst dadurch den Bearbeitungsvorgang aus. Typischerweise kommt hierzu eine Lichtschranke zum Einsatz, die mit der erforderlichen Präzision die Präsenz einer sowohl transparenten als auch opaken Materialkante erkennen kann. Lichtschranken dieser Art sind aus dem Stand der Technik bekannt. In einer vorteilhaften Weiterbildung der Ausführungsform wird das Signal des Sensors verwendet, um wahlweise einen Bearbeitungsvorgang des Bearbeitungsmoduls unmittelbar oder verzögert auszulösen. Auf diese Weise ist es möglich, die Bearbeitung, z.B. ein Lochen, Perforieren oder Schneiden beliebig auf dem blattförmigen Bedruckstoff zu platzieren.

In einer vorteilhaften Ausführungsform der erfindungsgemäßen Vorrichtung wird in einem Bypass-Betrieb bei mindestens einem Bearbeitungsmodul kein Bearbeitungsvorgang ausgelöst, sondern ein einlaufender blattförmiger Bedruckstoff an dem betreffenden Bearbeitungsmodul vorbei transportiert. Dies ist vorteilhaft, wenn die erfindungsgemäße Vorrichtung inline mit einer Druckmaschine / Kopierer in Verbindung steht und die Druckmaschine / der Kopierer auch für Druckaufträge eingesetzt wird, die keinerlei Weiterbearbeitung erfordern. Weiter ist die Möglichkeit des Bypass-Betriebs vorteilhaft, wenn die erfindungsgemäße Vorrichtung z.B. zwei Bearbeitungsmodule beinhaltet, die abwechselnd benutzt werden und jeweils nur ein Bearbeitungsmodul eine Bearbeitung durchführt und das andere sich im Bypass-Betrieb befindet. Auf diese Weise ist ein Wechsel zwischen Bearbeitungsmodi möglich, ohne einen Austausch der Bearbeitungsmodule vorzunehmen.

Vorteilhafterweise handelt es sich in der erfindungsgemäßen Vorrichtung bei dem zweiteiligen Bearbeitungswerkzeug rotatives Bearbeitungswerkzeug, bei dem eine Werkzeugwalze oberhalb des Durchlaufspfad eines blattförmigen Bedruckstoffes angeordnet ist, wobei die Werkzeugwalze mindestens ein Werkzeugelement trägt, das über den Umfang des ersten Werkzeugwalze hinausragt und eine Matrizenwalze unterhalb des Durchlaufspfads angeordnet ist, wobei die Matrizenwalze mindestens allen Werkzeugelementen der Werkzeugwalze entsprechende Matrizen aufweist und die beiden Walzen derart in einem Bearbeitungsmodul angeordnet sind und in Wirkverbindung miteinander stehen, so dass bei gegenläufigem Drehen der Walzen um ihre Achsen die Werkzeugelement der Werkzeugwalze in Eingriff mit den korrespondierenden Matrizen des Matrizenwalze geraten.

In einer Ausgestaltung der erfindungsgemäßen Vorrichtung handelt es sich bei einem Bearbeitungsmodul um ein Stanzmodul, wobei die Werkzeugelemente Stempel darstellen, die in mindestens einer möglichen Lochkombination auf der Werkzeugwalze angeordnet sind, zum Einbringen von Löchern in einen durchlaufenden blattförmigen Bedruckstoff. Die Lochkombination kann dabei insbesondere eine Lochreihe darstellen, die entlang des Randes der blattförmigen Bedruckstoffe eingebracht wird, um anschließend eine Drahtbindung durchführen zu können.

Vorteilhafterweise ist das Stanzmodul derartig ausgestaltet, dass das Stanzmodul zwischen unterschiedlichen Lochkombinationen wechseln kann, in dem die Lage von einigen der sich auf dem Umfang der Werkzeugwalze befindlichen Stempel radial ändern lässt, insbesondere sich diese Stempel versenken lassen und so nicht zur Herstellung von Löchern im blattförmigen Bedruckstoff beitragen. Vorteilhafterweise wird der beim Stanzen mit dem Stanzmodul entstehende Abfall durch das Innere der Matrizenwalze nach außen transportiert, wo er dann in einen leicht zu leerenden Abfallbehälter fällt.

In einer weiteren Ausgestaltung der erfindungsgemäßen Vorrichtung handelt es sich bei mindestens einem Bearbeitungsmodul um ein Schneidemodul, bei dem die Werkzeugelemente in Umfangsrichtung und/oder achsparallel und/oder in einer beliebigen anderen Ausrichtung auf dem Umfang der Werkzeugwalze angebrachte Schneiden darstellen, um damit blattförmige Bedruckstoffe zu beschneiden. Dabei kann vorteilhaft mittels des Schneidemoduls eine Formatsverkleinerung der blattförmigen Bedruckstoffe durchgeführt werden, insbesondere eine Verkleinerung von A3 auf A4 und/oder A4 auf A5. Das ist von besonderem Vorteil, da das Bedrucken kleiner Formate wie A5 große technische Schwierigkeiten mit sich bringt und Standarddrucker, Druckmaschinen und viele Weiterverarbeitungsvorrichtungen für diese Formate nicht ausgelegt sind.

In einer besonders Weiterbildung dieser Ausführungsform sind die Schneiden derart ausgelegt, so dass durchlaufende blattförmige Bedruckstoffe mit einem Registerkantenbeschnitt versehen werden. Register werden verwendet um ein schnelleres Aufklappen eines Buches oder einer Zeitschrift zu erlauben. Dabei sind die Registermarkierungen Aus- oder Einbuchtungen in der Seitenkante, die durch einen entsprechenden Beschnitt hergestellt werden.

In einer weiteren Ausgestaltung der erfindungsgemäßen Vorrichtung handelt es sich bei mindestens einem Bearbeitungsmodul um ein Prägemodul, bei dem mittels auf dem Umfang angebrachte Stempel blattförmige Bedruckstoffe geprägt sind, insbesondere mit einem Schriftzug versehen werden. In einer vorteilhaften Weiterbildung sind bei dem Prägemodul die Werkzeugelemente achsparallel und/oder in Umfangsrichtung auf dem Umfang der Werkzeugwalze angebrachte stumpfe Klingen, mittels deren blattförmige Bedruckstoffe gerillt werden, insbesondere um ein anschließendes Falten der blattförmigen Bedruckstoffe zu unterstützen. Dies ist von besonderem Vorteil für das Herstellen von Einbandselementen für Broschüren, wodurch ein verringertes Aufspreizen des Einbandes, der häufig aus einem steiferen Bedruckstoff gefertigt ist, gewährleistet wird.

In einer weiteren Ausgestaltung der erfindungsgemäßen Vorrichtung handelt es sich bei mindestens einem der Bearbeitungsmodule um ein Perforiermodul, bei dem die Werkzeugelemente auf dem Umfang der Werkzeugwalze angebrachte Nadeln darstellen, zur Perforation von blattförmigen Bedruckstoffen.

In einer besonders vorteilhaften Ausführungsform weist die erfindungsgemäße Vorrichtung mindestens zwei Bearbeitungsmodule auf, wobei es sich bei den Bearbeitungsmodulen um eine beliebige Kombination aus Stanzmodulen, Schneidemodulen, Prägemodulen und/oder Perforiermodulen handelt.

In einer weiteren besonders vorteilhaften Ausgestaltung der erfindungsgemäßen Vorrichtung wird der Wechsel der Bearbeitungsmodule automatisch durchgeführt. Dazu sind zwei oder mehrere Bearbeitungsmodule in einem Modulwechsler insbesondere übereinander angebracht, so dass bei Bedarf ein nicht mehr verwendetes Bearbeitungsmodul durch vertikale Verschiebung durch ein benötigtes Bearbeitungsmodul ausgetauscht werden kann.

Dem erfindungsgemäßen Gedanken entspricht auch ein Verfahren zum flexiblen Wechsel von Bearbeitungsmodi bei der fliegenden mechanischen Bearbeitung von blattförmigen Bedruckstoffen mit den folgenden Verfahrensschritten:
- Bereitstellen einer erfindungsgemäßen Vorrichtung gemäß der vorangegangenen Beschreibung,
- Lösen der lösbaren Befestigung zwischen mindestens einem Aufnahmeplatz und dem darin lösbar befestigten Bearbeitungsmodul mit mindestens einem Bearbeitungsmodus,
- manuelles Herausnehmen des Bearbeitungsmoduls,
- manuelles Einsetzen eines anderen Bearbeitungsmoduls mit einem anderen Bearbeitungsmodus,
- Schließen der lösbaren Befestigung zwischen dem Aufnahmeplatz und dem anderen Bearbeitungsmodul.

In einer vorteilhaften Weiterbildung des erfindungsgemäßen Verfahrens wird zusätzlich noch am Ende der folgende Schritt ausgeführt:
- automatisches Konfigurieren der Vorrichtung bezüglich des neuen Bearbeitungsmoduls.

In einer alternativen Ausführungsform des erfindungsgemäßen Verfahrens erfolgt der Wechsel zwischen den Bearbeitungsmodulen automatisch anstelle des manuellen Herausnehmens und Einsetzens des neuen Bearbeitungsmoduls.

Bevorzugte Ausführungsformen der erfindungsgemäßen Vorrichtung werden im folgenden unter Bezugnahme auf die Zeichnung im einzelnen näher beschrieben. Es zeigen in schematischer Darstellung:
- Fig. 1: eine schematische Draufsicht der erfindungsgemäßen Vorrichtung;
- Fig. 2: eine schematische Seitenansicht der erfindungsgemäßen Vorrichtung;
- Fig. 3a: eine schematische perspektivische Ansicht einer bevorzugten Ausrührungsform mit mehren Aufnahmeplätzen;
- Fig. 3b: eine schematische perspektivische Ansicht einer bevorzugten Ausführungsform mit automatischem Wechsler für Bearbeitungsmodule
- Fig. 4: eine schematische Ansicht eines Bearbeitungsmoduls der erfindungsgemäßen Vorrichtung;
- Fig. 5: eine schematische Darstellung einer beispielhaften Ausführungsform einer Werkzeugwalze für ein Stanzmodul;
- Fig. 6a: eine schematische Darstellung einer beispielhaften Ausführungsform einer Werkzeugwalze für ein Schneidemodul;
- Fig. 6b: eine schematische Darstellung einer beispielhaften Ausführungsform einer Werkzeugwalze für ein Schneidemodul für das Kantenbeschneiden für Registerblätter;
- Fig. 7: eine schematische Darstellung einer beispielhaften Ausführungsform einer Werkzeugwalze für ein Prägemodul;
- Fig. 8: eine schematische Darstellung einer beispielhaften Ausführungsform einer Werkzeugwalze für ein Perforiermodul;

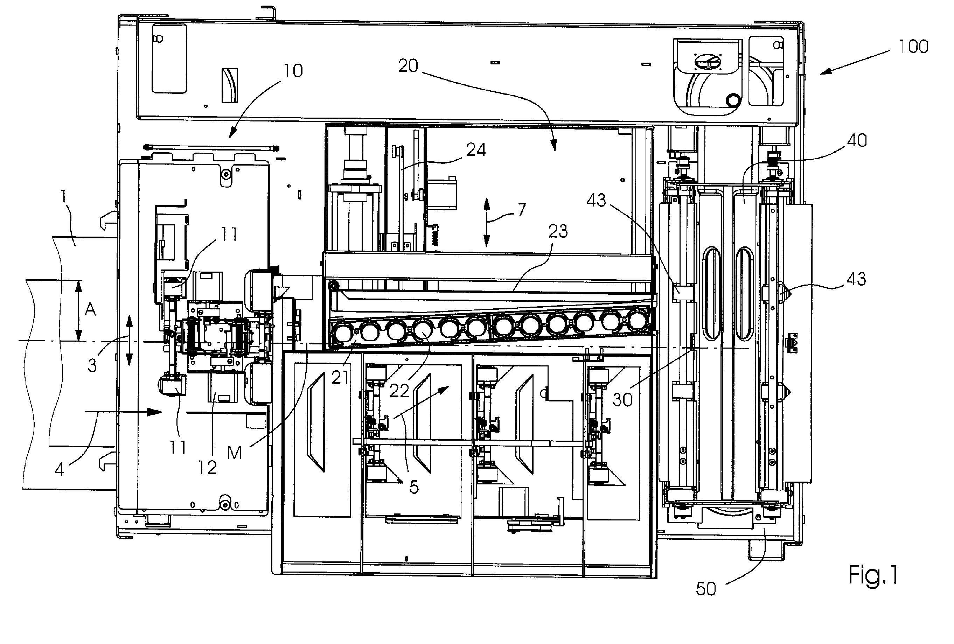

Die Fig. 1 zeigt die schematische Draufsicht des Gesamtaufbaus einer bevorzugten Ausführungsform der erfindungsgemäßen Vorrichtung 100 und beschränkt sich dabei auf die Darstellung von erfindungswesentlichen Komponenten. Weitere, allgemein bekannte und zum Betrieb der Vorrichtung erforderliche Antriebs und/oder Führungsmittel und Kurvenscheiben sowie elektrische Schaltkreise sind wenn, dann nur schematisch dargestellt bzw. werden nur in allgemeiner Form beschrieben.

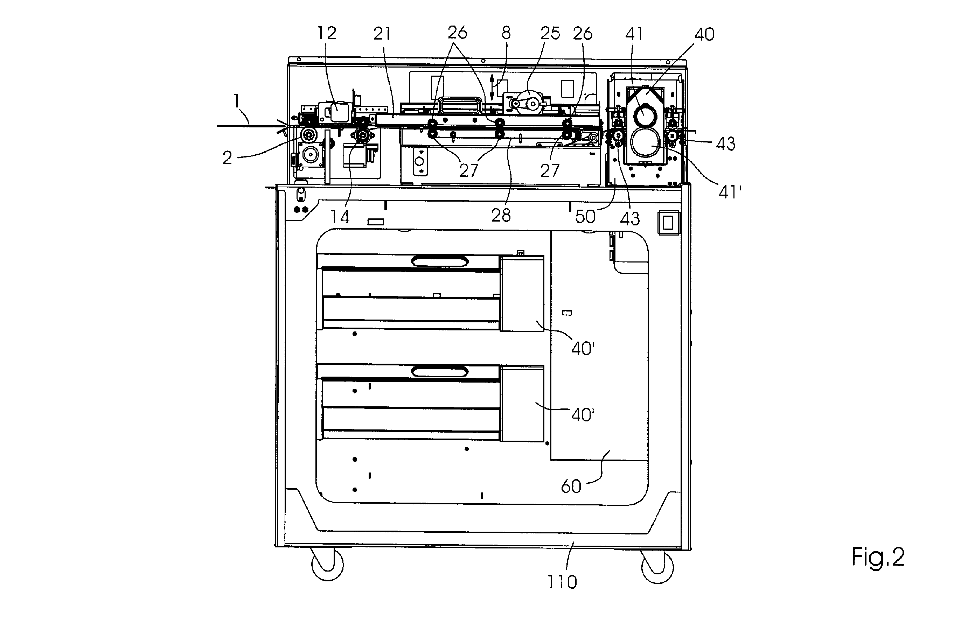

Wie in Fig. 1 und Fig. 2 gezeigt, treten blattförmige Bedruckstoffe 1 in der Nähe eines Transportrollenpaares 2 in die erfindungsgemäße Vorrichtung ein und weisen dabei einen Abstand A vom Seitenrand des blattförmigen Bedruckstoffes 1 zur Mittellinie M des Transportpfades der blattförmigen Bedrucksstoffe 1 durch die erfindungsgemäße Vorrichtung 100 entlang der mit dem Bezugszeichen 4 gekennzeichneten Bewegungsrichtung auf. In einer Preregistratur 10 wird der Abstand A mittels eines nicht gezeigten Kantensensors bestimmt und einer nicht dargestellten Logik übergeben. Axial verschiebbare Transportrollen 11 richten daraufhin während des Durchlaufens des blattförmigen Bedruckstoffs 1 den blattförmigen Bedruckstoff 1 so aus, dass der Abstand A im Wesentlichen der Hälfte der Breite des blattförmigen Bedruckstoffs 1 entspricht. Die Preregistratur kann damit Abweichungen von der Mitte des blattförmigen Bedruckstoffs 1 von der Mittellinie M von ± 15 mm vor der Preregistratur 10 ausgleichen und den blattförmigen Bedruckstoff 1 mit einer Genauigkeit von + 4 mm an die nachfolgende Registratur 20 übergeben. Dieser Vorgang wird während der Bewegung von dem Kantensensor überwacht, der das Erreichen der Sollposition des blattförmigen Bedruckstoffs 1 über der Mittellinie M signalisiert. Der Kantensensor kann dafür senkrecht zur Mittellinie verschoben werden, um seine Position an das Format des jeweilig zu bearbeitenden blattförmigen Bedruckstoffs 1 anzupassen. Die Bewegung in der in Fig. 1 mit dem Bezugszeichen 3 gekennzeichneten Richtung des blattförmigen Bedruckstoffs 1 im Bereich der Preregistratur 10 wird durch einen Motor 12 ermöglicht, der in Wirkverbindung mit dem axial verschiebbaren Transportrollenpaar 11 steht.

Der blattförmige Bedruckstoff 1 wird stromabwärts an eine Registratur 20 übergeben. Im Bereich der Registratur 20 wird der blattförmige Bedruckstoff 1 mittels eines schräglaufenden Transportbandes 28 in die mit dem Bezugszeichen 5 gekennzeichneten Richtung gegen einen Anschlag 23 geleitet. Zusätzlich wird der blattförmige Bedruckstoff 1 in die Bewegungsrichtung 4 entlang der Mittellinie M des Transportpfades bewegt. Der Schräglauf wird durch eine Kugelleiste ermöglicht, die den blattförmigen Bedruckstoff 1 gegen das schräglaufende Transportband andrückt. Durch das Schieben des blattförmigen Bedruckstoffs 1 gegen den Anschlag 23 wird eine Schieflage des blattförmigen Bedruckstoffs 1 mit für den nachfolgenden Bearbeitungsvorgang ausreichenden Präzision ausgeglichen, also zu der Mittellinie M parallele Seitenränder des blattförmigen Bedruckstoffs 1 erzielt. Die Distanz des Anschlag 23 zur Mittellinie M ist dabei mittels eines Riemenzugs 24 automatisch verstellbar, um die Distanz dem Format des blattförmigen Bedruckstoffs 1 anzupassen. Anstelle des Reimenzugs läßt sich auch eine Kurvenscheibe oder ein anderer dem Fachmann aus dem Stand der Technik bekannten Mechanismus zur gesteuerten Verschiebung verwenden. Mit der erfindungsgemäßen Vorrichtung 100 können auf diese Art Blattgrößen von 140 mm bis 300 mm Breite stufenlos an die Mittellinie M angepasst werden.

In einem Bypass-Betrieb wird die Registratur 20 ausgeschaltet, indem mittels einer Kurvenscheibe 25 (vergleich Fig. 2) oder eines vergleichbaren Antriebs zum einen die Kugelleiste 21 in der in Fig. 2 mit dem Bezugszeichen 8 gekennzeichneten Richtung angehoben wird und gleichzeitig ein Transportrollenpaar 26 in Kontakt mit dem blattförmigen Bedruckstoff 1 gebracht wird. Durch das Anheben der Kugelleiste 21 wird die Funktion des schräglaufenden Transportbandes 28 ausgeschaltet und eine Veränderung der Lage des blattförmigen Bedruckstoffs 1 in Relation zur Mittellinie bleibt aus.

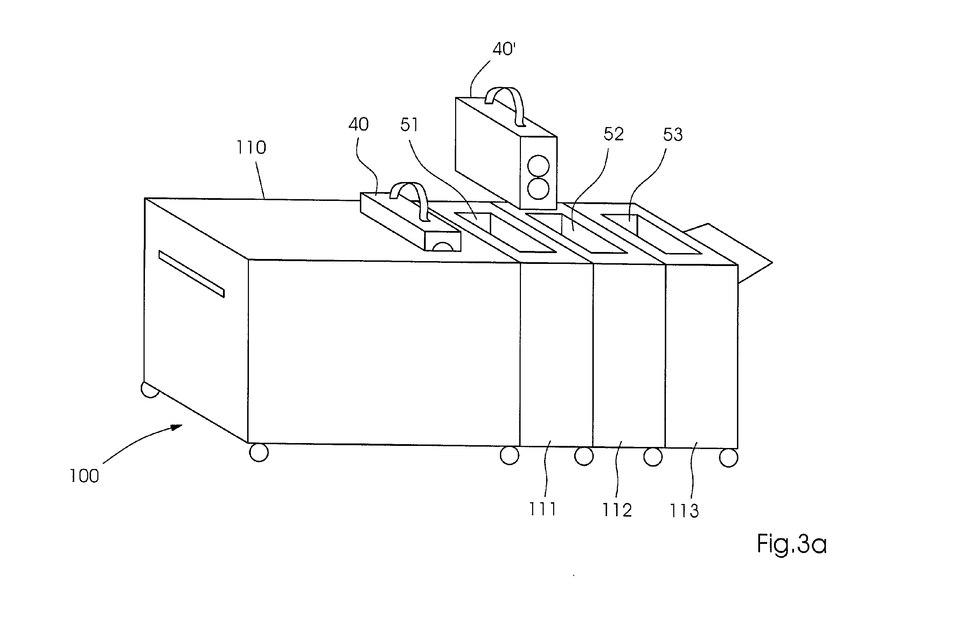

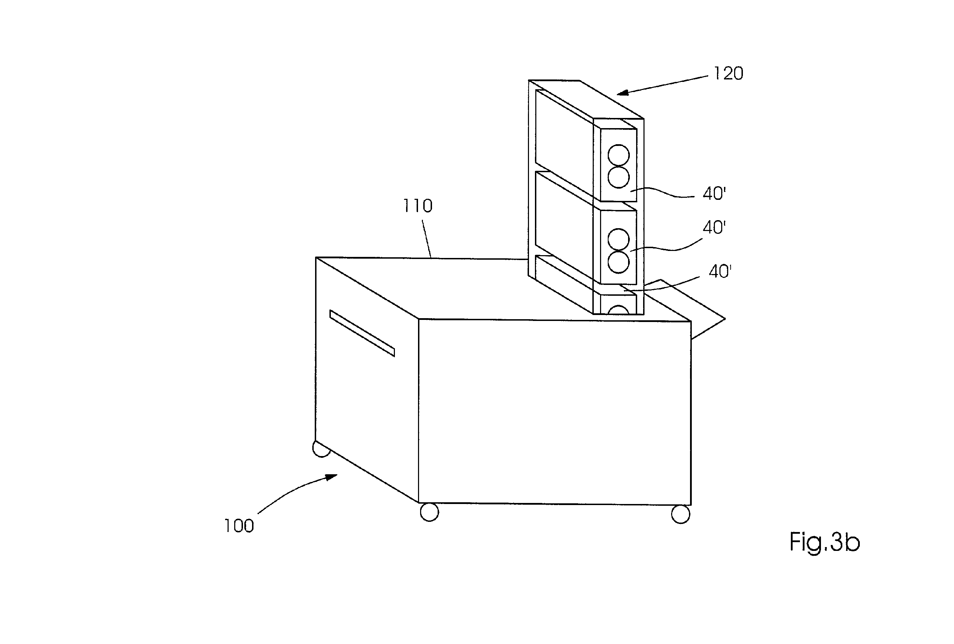

Der blattförmige Bedruckstoff 1 wird an das Bearbeitungsmodul 40 weitergeleitet und dort entsprechend der Funktionalität des Bearbeitungsmoduls 40 bearbeitet und anschließend weitertransportiert, entweder zu einem weiteren Bearbeitungsmodul 40' wie in Fig. 3a zu erkennen ist oder in eine nicht dargestellte Ablage für blattförmige Bedruckstoffe 1 oder zu einem weiteren unabhängigen Bearbeitungsmodul wie z.B. einer Bindevorrichtung. Das Bearbeitungsmodul 40 ist austauschbar in einem Aufnahmeplatz 50, 51, 52, 53, befestigt, wie in Fig. 2 und 3 dargestellt ist.

In einem Bypass-Betrieb wird das Signal des Kantensensors 30 ignoriert und der blattförmige Bedruckstoff 1 nur von den Transportrollen 43 durch das Bearbeitungsmodul 40 transportiert, ohne dass eine Bearbeitung durch das Bearbeitungswerkzeug 41 ausgelöst wird.

Unterhalb des Bearbeitungsmoduls 40 ist ein Auffangbehälter für Abfall 60 angebracht, der einfach zu leeren oder auszutauschen ist.

Wie in Fig. 3a dargestellt, weist die erfindungsgemäße Vorrichtung 100 einen modularen Aufbau auf. Bearbeitungsmodule 40 mit bestimmten Bearbeitungsmodi werden in dafür vorgesehene Aufnahmeplätze 50, 51, 52, 53 eingesteckt und dort lösbar befestigt, z.B. durch Verklemmung oder durch Verschraubung oder einem vergleichbaren Mechanismus. Die erfindungsgemäße Vorrichtung kann dabei eine beliebige Anzahl von Aufnahmeplätzen aufweisen. In einer in Fig. 3a dargestellten Variante weist die erfindungsgemäße Vorrichtung 100 ein Gehäuse 110 mit einem Aufnahmeplatz für ein Bearbeitungsmodul 40 in einem Aufnahmeplatz 50 auf, zusätzliche Bearbeitungsmodule 41' können aber in Zusatzgehäusen 111, 112, 113 eingesetzt werden, wobei das Anbringen der Zusatzgehäuse nach dem "Plug and Play" Prinzip funktioniert. Dadurch kann je nach Bedarf die Größe der erfindungsgemäßen Vorrichtung 100 an unterschiedliche Bedürfnisse angepasst werden, etwa die Bedürfnisse eines Druck- oder Druckweiterverarbeitungsbetriebes.

Für die erfindungsgemäße Vorrichtung stehen eine Mehrzahl an unterschiedlichen Bearbeitungsmodulen 40 mit unterschiedlichen Bearbeitungswerkzeugen 70, 80, 85, 90, 95 zur Verfügung. Die Bearbeitungswerkzeuge 70, 80, 85, 90, 95 können dabei mindestens einen Bearbeitungsmodus oder wie nachfolgend noch weiter erläutert, wird teilweise eine größere Anzahl unterschiedlicher Bearbeitungsmodi durchführen.

Ein Wechsel zwischen unterschiedlichen Bearbeitungsmodi erfolgt einerseits automatisch, wenn die Bearbeitungsmodi, zwischen denen gewechselt werden soll von dem gleichen Bearbeitungsmodul 40 durchführbar sind, oder manuell, indem ein Bearbeitungsmodul 40 mit einem ersten Bearbeitungsmodus gegen ein anderes Bearbeitungsmodul 40' mit einem zweiten Bearbeitungsmodus ausgetauscht wird.

Der Austausch eines ersten und eines zweiten Bearbeitungsmoduls 40, 40' erfolgt dabei erfindungsgemäß durch Lösen einer lösbaren Befestigung zwischen dem ersten Bearbeitungsmodul 40 und dem Aufnahmeplatz 50, 51, 52, 53, Herausziehen des ersten Bearbeitungsmoduls 40, Einsetzen des zweiten Bearbeitungsmoduls 40' in den nunmehr freien Aufnahmeplatz 50, 51, 52, 53 und Befestigen der lösbaren Befestigung zwischen Bearbeitungsmodul 40 und dem Aufnahmeplatz 50, 51, 52, 53. Dabei kommen mechanische und/oder elektrische Schnittstellen 44 an dem Bearbeitungsmodul und dem betreffenden Aufnahmeplatz 50, 51, 52, 53 in Kontakt, die z.B. den mechanischen Antrieb für die Bewegungen innerhalb des Bearbeitungsmoduls 40, 40' von der erfindungsgemäßen Vorrichtung zum Bearbeitungsmodul gewährleisten und/oder die Übertragung von elektrischen Steuersignalen ermöglichen, wie das Auslösen eines Bearbeitungsvorgangs.

Beim Vorhandensein von mehreren Aufnahmeplätzen 50, 51, 52, 53 ist ein Wechsel der Bearbeitungsmodi von bereits in die Aufnahmeplätze 50, 51, 52, 53 eingesetzten Bearbeitungsmodule 40, 40' zusätzlich durchführbar, indem das Bearbeitungsmodul 40 mit dem ersten Bearbeitungsmodus von einem aktiven Betrieb in einen Bypass-Betrieb gesetzt wird und ein zweites Bearbeitungsmodul 40', das sich bis dahin z.B. im Bypass-Betrieb befunden hat, in einen aktiven Betrieb umgeschaltet wird. Dieses Umschalten kann dabei sowohl manuell als auch automatisch gesteuert werden.

Andere Kombinationen vom Wechsel zwischen Bearbeitungsmodi, die sich aus dem Wechsel von Bearbeitungsmodulen 40, 40' mit unterschiedlichen Bearbeitungsmodi, dem Wechsel von unterschiedlichen Bearbeitungsmodi einzelner Bearbeitungsmodule 40, 40' und der Verwendung einer Mehrzahl von Aufnahmeplätzen 50, 51, 52, 53 für diese Bearbeitungsmodule 40, 40' ergeben, liegen ebenfalls im Rahmen der hier dargestellten Erfindung.

Der Wechsel zwischen unterschiedlichen Bearbeitungsmodulen 40, 40' erfolgt in einer alternativen Ausgestaltung der erfindungsgemäßen Vorrichtung automatisch. Wie in Fig. 3b gezeigt ist dazu eine Mehrzahl von Bearbeitungsmodulen 40, 40' übereinander in einem Bearbeitungsmodulwechsler 120 angeordnet. Der Wechsel zwischen den Bearbeitungsmodulen 40, 40' erfolgt hier durch eine vertikale Verschiebung der Bearbeitungsmodule 40, 40', nachdem die Befestigung des aktuellen Bearbeitungsmoduls 40 in dem Aufnahmeplatz 50 ebenfalls automatisch gelöst wurde. Sobald das neue Bearbeitungsmodul 40' in den Aufnahmeplatz 50 eingesetzt ist, wird die Befestigung des Bearbeitungsmoduls 40' geschlossen und die Vorrichtung für das neue Bearbeitungsmodul 40' konfiguriert. Eine revolverförmige Anordnung der Mehrzahl von Bearbeitungsmodulen ist auch realisierbar. Eine Mischung aus manuell und automatisch wechselbarer Bearbeitungsmodule liegt ebenfalls im Rahmen der hier dargestellten Offenbarung.

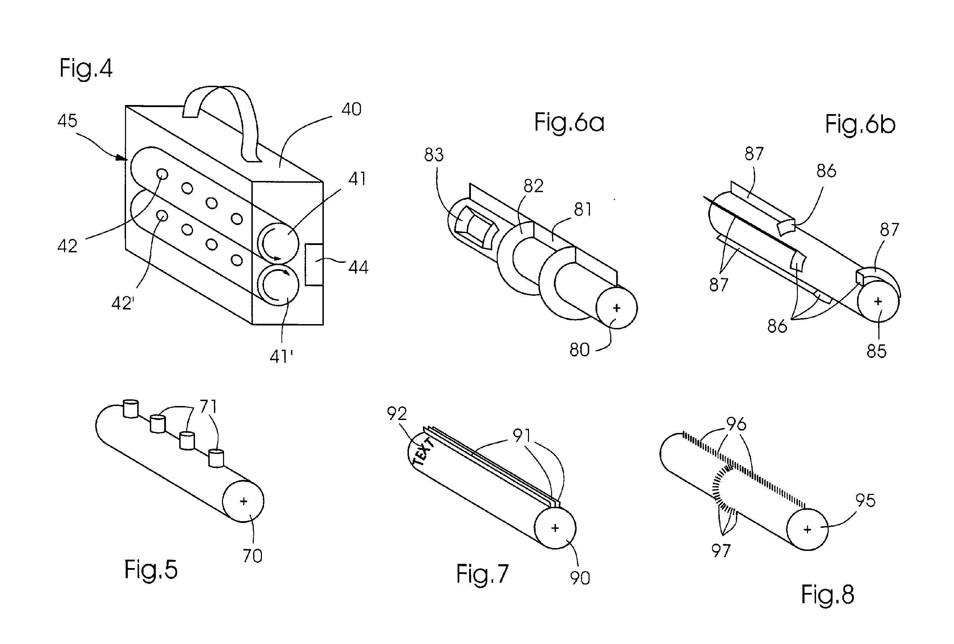

Der Aufbau eines Bearbeitungsmoduls 40 ist in Fig. 4 schematisch dargestellt. Das Bearbeitungsmodul 40 ist erfindungsgemäß mit einem zweiteiligen rotativen Bearbeitungswerkzeug 45 ausgestattet. Hierfür sind innerhalb des Bearbeitungsmoduls 40 zwei zylindrische, gegenläufige Walzen 41, 41' angebracht, eine Werkzeugwalze 41 und eine Matrizenwalze 41', die synchronisierte Bewegungen ausführen, z.B. durch eine Kopplung mittels eines Getriebes oder eines Zahn- oder Keilriemens oder anderem dem Fachmann aus dem Stand der Technik bekannten Kopplungsmechanismen. Das obere Bearbeitungswerkzeug 41 trägt Werkzeugelemente 42, 71, 71, 82, 83, 86, 87, 91, 92, 96, 97, abhängig vom Bearbeitungsmodus des Bearbeitungsmoduls 40. Diese Werkzeugelemente 42, 71, 71, 82, 83, 86, 87, 91, 92, 96, 97 ragen über den Umfang der Werkzeugwalze hinaus und tauchen dadurch bei einer drehenden Bewegung des oberen Bearbeitungswerkzeuges in die Ebene, in der sich die blattförmigen Bedruckstoffe 1 bewegen, ein, wodurch die Bearbeitung der blattförmigen Bedruckstoffe erreicht wird.

Das untere Bearbeitungswerkzeug weist Matrizen 42' auf, die den jeweiligen Werkzeugelementen 42, 71, 71, 82, 83, 86, 87, 91, 92, 96, 97 des oberen Bearbeitungswerkzeugs 41 entsprechen und mit diesen Werkzeugelementen 42, 71, 71, 82, 83, 86, 87, 91, 92, 96, 97 zur Bearbeitung eines durchlaufenden blattförmigen Bedruckstoffes während des Rotierens der Walzen 41, 41' in Eingriff stehen. Dadurch, dass sich die Matrizenwalze 41', die in steter Wirkverbindung mit der Werkzeugwalze 41 steht, mit der Werkzeugwalze 41 zusammen beim Austausch von Bearbeitungsmodulen 40, 40' ausgetauscht wird, entfällt eine zeitaufwendige Justierung zwischen den beiden Walzen 41, 41', der andernfalls bei jedem Wechsel zu erfolgen hätte.

Beispiele für unterschiedliche Werkzeugwalzen 41, 70, 80, 85, 90, 95 für unterschiedliche Bearbeitungsmodule 40, 41 sind in Fig. 5 bis Fig. 8 dargestellt. Bei dem in Fig. 5 dargestellten Bearbeitungsmodul 40 zum Stanzen von Löchern in blattförmige Bedruckstoffe 1 z.B. zur Ablage in Ordnern oder zur Vorbereitung für eine anschließende Drahtkammbindung handelt es sich bei dem oberen Bearbeitungswerkzeug 41 um ein Stanzwerkzeug 70. Dabei befinden sich radial auf dem Umfang des Stanzwerkzeugs 70 Stanzelemente 71. Ein Wechsel zwischen verschiedenen Stanzmustern ist hierbei durch das radiale Versenken der Stempel unter den Umfang des Stanzwerkzeugs 70 möglich.

Bei dem in Fig. 6a dargestellten Bearbeitungswerkzeug 40 zum Schneiden von blattförmigen Bedruckstoffen 1 handelt es sich bei der Werkzeugwalze 41 um ein Schneidewerkzeug 80. Dabei befinden sich radial auf dem Umfang des Schneidewerkzeugs 80 Querschneideelemente 81 und/oder Längsschneideelemente 82 z.B. zur Formatsverkleinerung oder Kantentrimmung und/oder Schneidelemente 83 zur Herstellung von Fenstern oder anderen Formen in einem blattförmigen Bedruckstoff 1, wie sie z.B. häufig in die Einbänden sogenannter Softcover-Bücher eingebracht werden.

In Fig. 6b ist ein Bearbeitungswerkzeug 85 zur Herstellung von Kantenbeschnitt für Register gezeigt. Hier ist eine der Schneiden 87 im wesentlichen parallel zur Seitenkante ausgerichtet, in die das Register eingebracht werden soll. Mindestens eine zweite Schneide 86 schneidet quer dazu und führt zu einem vollständigen Heraustrennen des überflüssigen Materials. Ebenfalls sind Schneiden für einen halbkreisförmigen oder andersförmigen Kantenbeschnitt für Register möglich, die entsprechende Geometrien aufweisen.

Bei dem in Fig. 7 dargestellten Bearbeitungsmodul 40 zum Prägen von blattförmigen Bedruckstoffen 1 handelt es sich bei der Werkzeugwalze 41 um ein Prägewerkzeug 90. Dabei befinden sich radial auf dem Umfang des Prägewerkzeugs 90 Prägerillen 91, die z.B. axial oder in Umfangsrichtung verlaufen können und/oder Stempel zum Einprägen von Schriftzügen 92 oder Emblemen, Logos oder anderem.

Bei dem in Fig. 8 dargestellten Bearbeitungsmodul 40 zum Perforieren von blattförmigen Bedruckstoffen 1 handelt es sich bei dem der Werkzeugwalze 41 um ein Perforierwerkzeug 95. Dabei befinden sich radial auf dem Umfang des Perforierwerkzeugs 95 axiale Perforiernadeln 96 oder Perforiernadeln in Umfangsrichtung 97 z.B. zur entsprechenden Herstellung von Abrisskanten in eine blattförmigen Bedruckstoff.

### Liste der Bezugszeichen

- 1: blattförmiger Bedruckstoff
- 2: Transportrollen
- 3: Bewegungsrichtung der axial verschiebbaren Transportrollen
- 4: Bewegungsrichtung eines blattförmigen Bedruckstoffs durch die Vorrichtung
- 5: Bewegungsrichtung des Schräglaufs
- 6: Bewegungsrichtung der Kurvenscheibe
- 7: Bewegungsrichtung des Anschlags
- 8: Bewegungsrichtung der Gegenrollen
- 9, 9': Bewegungsrichtung des Bearbeitungswerkzeugs
- 10: Preregistratur
- 11: axial verschiebbare Transportrollen
- 12: Motor
- 14: Transportrollen
- 20: Registratur
- 21: Kugelleiste
- 22: Kugel
- 23: Anschlag
- 24: Riemenzug
- 25: Kurvenscheibe
- 26: Gegenrollen
- 27: Transportrollen
- 28: schräglaufendes Transportband
- 30: Kantensensor
- 40, 40': Bearbeitungsmodul
- 41,: Werkzeugwalze
- 41': Matrizenwalze
- 42: Werkzeugselement
- 42': Matrize
- 43: Transportrollen
- 44: Schnittstelle
- 45: Bearbeitungswerkzeug
- 50: Aufnahmeplatz
- 51: Aufnahmeplatz
- 52: Aufnahmeplatz
- 53: Aufnahmeplatz
- 60: Auffangbehälter für Abfall
- 70: Stanzwerkzeug
- 71: Stanzelement (Stempel)
- 80: Schneidewerkzeug
- 81: Querschneidelement
- 82: Längsschneideelement
- 83: Fensterschneideelement
- 85: Registerschneidewerkzeug
- 86: Registerschneide
- 87: Registerschneide
- 90: Prägewerkzeug
- 91: Prägerillen
- 92: Textprägestempel
- 95: Perforierwerkzeug
- 96: Querperforationsnadeln
- 97: Längsperforationsnadeln
- 100: erfindungsgemäße Vorrichtung
- 110: Gehäuse der Vorrichtung
- 111: Zusatzgehäuse
- 112: Zusatzgehäuse
- 113: Zusatzgehäuse
- 120: Bearbeitungsmodulwechsler
- A: Abstand Seitenkante/Mittellinie
- M: Mittellinie des Transportpfades blattförmiger Bedruckstoffe

## Patentansprüche

**1.** Vorrichtung zur fliegenden mechanischen Bearbeitung von blattförmigen Bedruckstoffen (1) mit mindestens einem zweiteiligen Bearbeitungswerkzeug (45) mit mindestens einem Bearbeitungsmodus für die mechanische Bearbeitung von blattförmigen Bedruckstoffen (1),
**dadurch gekennzeichnet,**
**dass** das zweiteilige Bearbeitungswerkzeug (45) in einem Bearbeitungsmodul (40, 40') angeordnet ist und die Vorrichtung (100) einen Aufnahmeplatz (50) umfasst, an dem das Bearbeitungsmodul (40, 40') austauschbar befestigt ist, wobei der Aufnahmeplatz (50) auch mindestens ein Bearbeitungsmodul (40, 40') mit mindestens einem anderen Bearbeitungsmodus aufnehmen kann.

**2.** Vorrichtung nach dem Anspruch 1,
**dadurch gekennzeichnet,**
**dass** es sich bei dem Bearbeitungsmodus des Bearbeitungswerkzeugs (45) um mindestens einen der Bearbeitungsmodi Stanzen, Schneiden, Prägen, Rillen, Falten oder Perforieren handelt.

**3.** Vorrichtung nach einem der Ansprüche 1 bis 2,
**dadurch gekennzeichnet,**
**dass** die Vorrichtung (100) mindestens eine Registrierungsvorrichtung (10, 20) zur Ausrichtung der blattförmigen Bedruckstoffe (1) während des Einlaufens in die Vorrichtung (100) stromabwärts vor dem Bearbeitungsmodul (40, 40') aufweist.

**4.** Vorrichtung nach Anspruch 3,
**dadurch gekennzeichnet,**
**dass** die Registrierungsvorrichtung (20) ein auf einem Durchlaufspfad transportierten blattförmigen Bedruckstoff (1) mittels eines Schräglaufs (21, 22, 28) mittig zum Durchlaufspfad ausrichtet, insbesondere entsprechend des Formats des blattförmigen Bedruckstoffs (1).

**5.** Vorrichtung nach dem Anspruch 4,
**dadurch gekennzeichnet,**
**dass** das zum Durchlaufspfad mittige Ausrichten des blattförmigen Bedruckstoffs (1) durch einen automatisch verschiebbaren Anschlag (23) durchgeführt wird.

**6.** Vorrichtung nach einem der Ansprüche 1 bis 5,
**dadurch gekennzeichnet,**
**dass** die Vorrichtung stromaufwärts von dem Bearbeitungsmodul (40, 40') mindestens eine Sensorvorrichtung (30) zur Steuerung des Bearbeitungsvorgangs aufweist.

**7.** Vorrichtung nach dem Anspruch 6,
**dadurch gekennzeichnet,**
**dass** die Sensorvorrichtung (30) die Vorderkante eines durchlaufenden blattförmigen Bedruckstoff (1) detektiert und dadurch der Bearbeitungsvorgang ausgelöst wird.

**8.** Vorrichtung nach dem Anspruch 7,
**dadurch gekennzeichnet,**
**dass** das Detektieren wahlweise unmittelbar oder verzögert zur Auslösung des Bearbeitungsvorgangs führt.

**9.** Vorrichtung nach einem der Ansprüche 1 bis 8,
**dadurch gekennzeichnet,**
**dass** in einem Bypass- Betrieb bei mindestens einem Bearbeitungsmodul (40, 40') kein Bearbeitungsvorgang ausgelöst wird, sondern ein einlaufender blattförmiger Bedruckstoff (1) an dem betreffenden Bearbeitungsmodul (40, 40') vorbei transportiert wird.

**10.** Vorrichtung nach einem der Ansprüche 1 bis 9,
**dadurch gekennzeichnet,**
**dass** bei dem zweiteiligen Bearbeitungswerkzeug (45) eine Werkzeugwalze (41) oberhalb des Durchlaufspfad eines blattförmigen Bedruckstoffes (1) angeordnet ist, wobei die Werkzeugwalze (41) mindestens ein Werkzeugelement (42) trägt, das über den Umfang des ersten Werkzeugwalze (41) hinausragt und eine Matrizenwalze (41') unterhalb des Durchlaufspfads angeordnet ist, wobei die Matrizenwalze (41') mindestens allen Werkzeugelementen (42) der Werkzeugwalze (41) entsprechende Matrizen (42') aufweist und die beiden Walzen (41, 41') derart in einem Bearbeitungsmodul (40, 40') angeordnet sind und in Wirkverbindung miteinander stehen, so dass bei gegenläufigem Drehen der Walzen (41, 41') um ihre Achsen die Werkzeugelemente (42) der Werkzeugwalze (41) in Eingriff mit den korrespondierenden Matrizen (42') des Matrizenwalze (41') geraten.

**11.** Vorrichtung nach Anspruch 10,
**dadurch gekennzeichnet,**
**dass** es sich bei einem Bearbeitungsmodul (40, 40') um ein Stanzmodul handelt, wobei die Werkzeugelemente (42) Stempel (71) darstellen, die in mindestens einer möglichen Lochkombination auf der Werkzeugwalze (41, 70) angeordnet sind, zum Einbringen von Löchern in einen durchlaufenden blattförmigen Bedruckstoff (1).

**12.** Vorrichtung nach Anspruch 11,
**dadurch gekennzeichnet,**
**dass** das Stanzmodul zwischen unterschiedlichen Lochkombinationen wechseln kann, in dem die Lage von einigen der sich auf dem Umfang der Werkzeugwalze (41, 70) befindlichen Stempel (71) radial ändern lässt, insbesondere sich diese Stempel (71) versenken lassen und so nicht zur Herstellung von Löchern im blattförmigen Bedruckstoff (1) beitragen.

**13.** Vorrichtung nach einem der Ansprüche 11 bis 12,
**dadurch gekennzeichnet,**
**dass** Stanzabfall durch das Innere der Matrizenwalze (41') nach außen transportiert wird.

**14.** Vorrichtung nach Anspruch 10,
**dadurch gekennzeichnet,**
**dass** es sich bei mindestens einem Bearbeitungsmodul (40, 40') um ein Schneidemodul handelt, bei dem die Werkzeugelemente (42) auf dem Umfang der Werkzeugwalze (41, 80) angebrachten Schneiden (81, 82, 83, 86, 87) darstellen, zum Beschneiden von blattförmigen Bedruckstoffen (1).

**15.** Vorrichtung nach Anspruch 14,
**dadurch gekennzeichnet,**
**dass** es sich bei dem Schneidemodul um eine Vorrichtung für den Kantenbeschnitt für Registerblätter handelt, wo bei die Werkzeugelemente (42) auf dem Umfang der Werkzeugwalze (41, 85) Schneiden (86, 87) darstellen, die derart geformt sind, so dass aus einer Kante eines blattförmigen Bedruckstoffs (1) ein Registereingriff ausgeschnitten wird.

**16.** Vorrichtung nach Anspruch 14,
**dadurch gekennzeichnet,**
**dass** mittels des Schneidemoduls insbesondere eine Formatsverkleinerung der blattförmigen Bedruckstoffe (1) durchgeführt werden kann, insbesondere eine Verkleinerung von A3 auf A4 und/oder A4 auf A5.

**17.** Vorrichtung nach Anspruch 10,
**dadurch gekennzeichnet,**
**dass** es sich bei mindestens einem Bearbeitungsmodul (40, 40') um ein Prägemodul handelt, bei dem mittels auf dem Umfang der Werkzeugwalze (41, 90) angebrachten Stempeln (91, 92) blattförmige Bedruckstoffe (1) geprägt werden, insbesondere mit einem Schriftzug versehen werden.

**18.** Vorrichtung nach Anspruch 17,
**dadurch gekennzeichnet,**
**dass** bei dem Prägemodul die Werkzeugelemente (42, 91, 92) achsparallel und/oder in Umfangsrichtung auf dem Umfang der Werkzeugwalze (42, 90) angebrachte stumpfe Klingen (91) darstellen, mittels deren blattförmige Bedruckstoffe (1) gerillt werden, insbesondere um ein anschließendes Falten der blattförmige Bedruckstoffe (1) zu unterstützen.

**19.** Vorrichtung nach Anspruch 10,
**dadurch gekennzeichnet,**
**dass** es sich bei mindestens einem Bearbeitungsmodul (40, 40') um ein Perforiermodul handelt, bei dem die Werkzeugelemente (42, 96, 97) auf dem Umfang der Werkzeugwalze (41, 95) angebrachten Nadeln (96, 97) darstellen, zur Perforation von blattförmigen Bedruckstoffen (1).

**20.** Vorrichtung nach einem der Ansprüche 1 bis 19,
**dadurch gekennzeichnet,**
**dass** die Vorrichtung (100) mindestens zwei Bearbeitungsmodule (40, 40') aufweist und es sich bei den Bearbeitungsmodulen (40, 40') um eine beliebige Kombination aus Stanzmodulen, Schneidemodulen, Prägemodulen und/oder Perforiermodulen handelt.

**21.** Vorrichtung nach einem der Ansprüche 1 bis 120,
**dadurch gekennzeichnet**
**dass** der Wechsel von Bearbeitungsmodulen (40, 40') mittels eines Bearbeitungsmodulwechslers (120) automatisch erfolgt.

**22.** Verfahren zum flexiblen Wechsel von Bearbeitungsmodi bei der fliegenden mechanischen Bearbeitung von blattförmigen Bedruckstoffen (1) mit den folgenden Verfahrensschritten:
a) Bereitstellen einer Vorrichtung (100) gemäß einem der Ansprüche 1 bis 20,
b) Lösen der lösbaren Befestigung zwischen mindestens einem Aufnahmeplatz (50) und dem darin lösbar befestigten Bearbeitungsmoduls (40, 40') mit mindestens einem Bearbeitungsmodus,
c) manuelles Herausnehmen des Bearbeitungsmoduls (40, 40')
d) manuelles Einsetzen eines anderen Bearbeitungsmoduls (40, 40') mit einem anderen Bearbeitungsmodus,
e) Schließen der lösbaren Befestigung zwischen dem Aufnahmeplatz (50) und dem anderen Bearbeitungsmoduls (40, 40').

**22.** Verfahren zum flexiblen Wechsel von Bearbeitungsmodi bei der fliegenden mechanischen Bearbeitung von blattförmigen Bedruckstoffen (1) mit den folgenden Verfahrensschritten:
a) Bereitstellen einer Vorrichtung (100) gemäß einem der Ansprüche 1 bis 21,
b) Lösen der lösbaren Befestigung zwischen mindestens einem Aufnahmeplatz (50) und dem darin lösbar befestigten Bearbeitungsmoduls (40, 40') mit mindestens einem Bearbeitungsmodus,
c) automatisches Herausnehmen des Bearbeitungsmoduls (40, 40'),
d) automatisches Einsetzen eines anderen Bearbeitungsmoduls (40, 40') mit einem anderen Bearbeitungsmodus,
e) Schließen der lösbaren Befestigung zwischen dem Aufnahmeplatz (50) und dem anderen Bearbeitungsmoduls (40, 40').

**23.** Verfahren nach einem der Ansprüche 22 oder 23 mit folgendem zusätzlichen Schritt:
f) automatisches Konfigurieren der Vorrichtung (100) bezüglich des neuen Bearbeitungsmoduls (40, 40').
